# EUROPEAN PATENT APPLICATION

(11) **EP 0 656 723 A1**
(43) Date of publication of application: **07.06.1995**
(21) Application number: 94111502.4
(22) Date of filing: 22.07.1994
(51) Int. Cl.: H04N 1/44

(54) **Method of and system for enciphering image information**

(30) Priority: 30.11.1993 JP 299559/93; 10.12.1993 JP 309574/93
(71) Applicant: TANI ELECTRONICS INDUSTRY CO., LTD., Tokyo (JP)
(72) Inventor: Tani, Okie, Koto-ku, Tokyo (JP)
(74) Representative: Grünecker, Kinkeldey, Stockmair & Schwanhäusser Anwaltssozietät

(57) **Abstract**

A method of and system for enciphering image information uses an optical fibre array including a plurality of fibres assembled irregularly. Image information is passed through the optical fibres which is then converted into an electric signal.

An image which is scanned with the optical fibre array appears scrambled at the output side of the optical fibre bundle. The image signal is converted by a CCD array into an electric signal.

The positional relationship of the fibres at the input and the output side is determined. A position designating code is sent to a receiver for deciphering the image information.

## Description

### BACKGROUND OF THE INVENTION

The present invention relates to a method of and system for enciphering image information when dealt with by computers, facsimile equipments, copying machines or diverse cameras.

Conventionally, when image information is dealt with by the computers, facsimile equipments, copying machines or diverse cameras, such image information is transmitted/displayed, reproduced, copied or imaged in a state comprehensible to all persons concerned. In other words, with the above prior art equipments, image information is dealt with in a raw state. Therefore, even when it is desirable to present image information to limited persons in a available state, the confidentiality of image information is difficult to obtain. One of measures to cope with such problem is to encipher image information by computer processing, which is, however, a complicated operation which needs much time. Moreover, experiences reveal that decipherment is possible in most of the cases since encipherment by computer processing is carried out logically.

It is, therefore, an object of the present invention to provide a method of and system for enciphering image information which allows easy encipherment and impossible decipherment.

### SUMMARY OF THE INVENTION

According to one aspect of the present invention, there is provided a method of enciphering and deciphering an image information with image elements, comprising the steps of:
forming a means for guiding the image information, said guiding means including a plurality of unit guides with end faces on first and second sides, said end faces on said first and second sides failing to correspond to each other in view of a positional relationship, each unit guide serving to guide one of the image elements;
giving position designating codes to said end faces of said plurality of unit guides on said first and second sides;
obtaining a corresponding relation information on said position designating codes on said first and second sides; and
providing to an image information processing device the image information which is input to said guiding means on said first side and output therefrom on said second side,
wherein when deciphering the image information as provided, said image information processing device recognizes said position designating codes of the image elements of the image information as provided and rearranges the image elements in accordance with said corresponding relation information so as to restore the image information input to said guiding means.

According to another aspect of the present invention, there is provided a system for enciphering and deciphering an image information with image elements, comprising:
a means for guiding the image information, said guiding means including a plurality of unit guides with end faces on first and second sides, said end faces on said first and second sides failing to correspond to each other in view of a positional relationship, each unit guide serving to guide one of the image elements, said end faces on said first and second sides having position designating codes, respectively;
a means for converting the image information obtained through said guiding means into a predetermined data;
a means for providing said predetermined data;
a means for receiving said predetermined data derived from said providing means;
a means for storing a corresponding relation information on said position designating codes on said end faces on said first and second sides;
a means for processing said predetermined data derived from said receiving means in recognizing said position designating codes of the image elements of the image information output from said guiding means on said second side so as to rearrange the image elements in accordance with said corresponding relation information; and
a means for indicating the image elements of the image information as rearranged.

According to still another aspect of the present invention, there is provided a system for picking up an image information, comprising:
a means for guiding the image information, said guiding means including a plurality of unit guides as assembled regularly, each having an end face on an outgoing side; and
a means for converting photoelectrically the image information into an electric signal, said converting means including a plurality of light receiving elements, at least one of said plurality of light receiving elements being optically coupled with said end face of said each unit guide.

According to the other aspect of the present invention, there is provided a system for confirming an identity of an object, comprising:
a means for picking up an image information of the object;
a means for reading a unit of said image information of said picking up means;
a means for storing a unit of a criterion information for deciding the identity of said unit of said image information;
a means for comparing said unit of said image information with said unit of said criterion information; and
a means for deciding the identity of said unit of said image information in accordance with a result of said comparing means.

### BRIEF DESCRIPTION OF THE DRAWINGS

Fig. 1A is a perspective view showing an enciphering image guide means embodying the present invention, which comprises a single image guide;
Fig. 1B is an end view showing the incoming side of the enciphering image guide means;
Fig. 1C is a view similar to Fig. 1B, showing the outgoing side of the enciphering image guide means;
Fig. 2 is a diagrammatic view showing a system for obtaining corresponding relation information on position designating codes between the incoming and outgoing sides of the enciphering image guide means;
Fig. 3 is a block diagram showing a system using image information enciphered;
Fig. 4A is a view similar to Fig. 1C, showing the incoming side of another enciphering image guide means which comprises an enciphering image guide assembly;
Fig. 4B is a view similar to Fig. 4A, showing the outgoing side of another enciphering image guide means;
Fig. 5 is a view similar to Fig. 1A, showing an image pickup device; and
Fig. 6 is a view similar to Fig. 3, showing an inspection system for printed-circuit boards, etc.

### DETAILED DESCRIPTION OF THE INVENTION

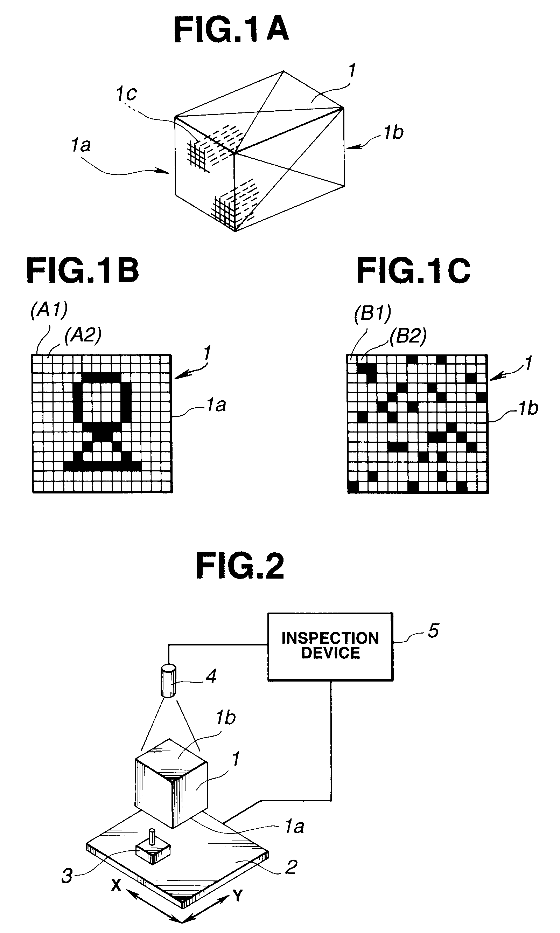

Referring first to Figs. 1A to 1C, an enciphering image guide means 1 comprises a plurality of optical fibers 1c assembled irregularly as shown in Fig. 1A, and having end faces on incoming and outgoing sides 1a, 1b formed in a predetermined shape, e.g., in a square as shown in Fig. 1A. In this embodiment, a single optical fiber 1c serves to guide one image element. It is to be noted that the end faces on the incoming and outgoing sides 1a, 1b may be formed in the other shape, for example, in a hexagon.

When the incoming side 1a of the enciphering image guide means 1 inputs image information as indicated by the image elements blacked in Fig. 1B, such image information is randomly dispersed on the outgoing side 1b of the enciphering image guide means 1 in a way as indicated by the image elements blacked in Fig. 1C, obtaining easy encipherment thereof. This encipherment is not carried out logically as computer processing, but casually based on irregular assemblage of the plurality of optical fibers 1c, so that decipherment borders on impossibility, enabling easy maintenance of the confidentiality of image information.

Next, a description will be made with regard to a method of using image information as enciphered in such a way.

Fig. 2 shows a system for obtaining corresponding relation information on position designating codes between the incoming and outgoing sides of the enciphering image guide means 1. The position designating codes A1, A2, ... are given to the optical fibers 1 of the enciphering image guide means 1 on the incoming side 1a as shown in Fig. 1B, whereas the position designating codes B1, B2, ... are given thereto on the outgoing side 1b as shown in Fig. 1C. The enciphering image guide means 1 is positioned in a space apart from an XY table 2, and fixed so that the incoming side 1a is opposite to an upper surface of the XY table 2. Arranged on the XY table 2 is a projector 3 which provides light incident on only any one of the optical fibers 1c of the enciphering image guide means 1 on the incoming side 1a. On the other hand, a charge coupled device (CCD) camera 4 is disposed opposite to the outgoing side 1b of the enciphering image guide means 1. Here, it is important to carry out position matching between the enciphering image guide means 1 and the CCD camera 4. An image signal of the CCD camera 4 is input to an inspection device 5.

The inspection device 5 serves to control the XY table 2 for scanning the incoming side 1a of the enciphering image guide means 1, i.e., sequentially providing light incident on each optical fiber end on the incoming side 1a. Light incident on the end face of any one of the optical fibers 1c goes out from a predetermined position of the outgoing side 1b. The CCD camera 4 catches this outgoing light, which is input to the inspection device 5. The inspection device 5 previously recognizes the position designating codes B1, B2, ... of the optical fiber end faces on the outgoing side 1b, and grasps the position designating code corresponding to the optical fiber end face from which light goes out. The above operation is carried out with regard to all of the optical fiber end faces on the incoming side 1a by scanning the projector 3, obtaining corresponding relation data on the position designating codes A1, A2,... of the optical fiber end faces on the incoming side 1a and those B1, B2, ... on the outgoing side 1b.

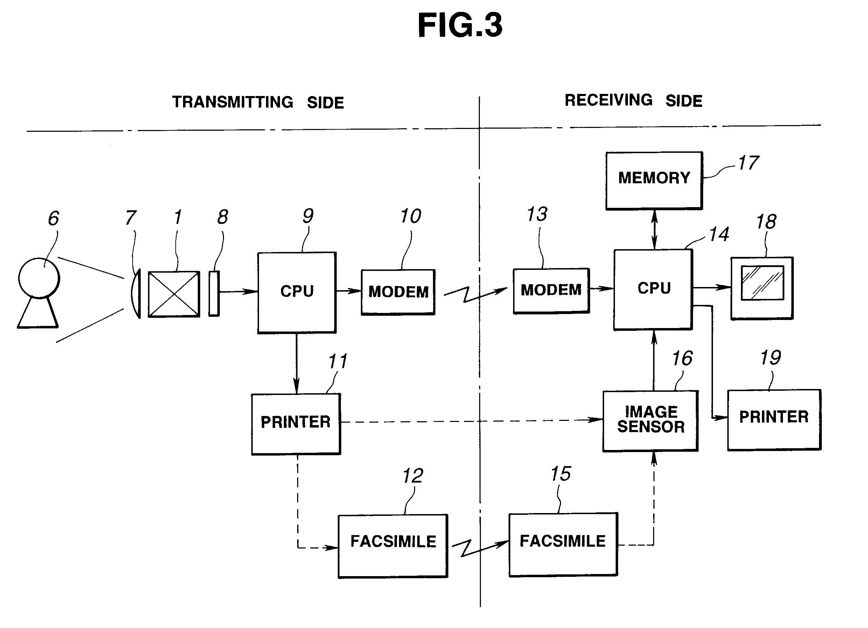

Fig. 3 shows an example of a system using image information enciphered according to the present invention. In this system, image information as enciphered in an image information enciphering device on the transmitting side is sent to an image information processing device on the receiving side wherein original image information is restored.

Referring to Fig. 3, on the transmitting side, an image of a subject 6 is picked up by a CCD camera 8 through a lens 7 and the enciphering image guide means 1 as shown in Fig. 1A, which is input to an image data processing device such as a central processing unit (CPU) 9. Here, the CCD camera 8, the lens 7 and the enciphering image guide means 1 constitute an image pickup device. In the CPU 9, image data as input is transmitted to the receiving side through a modem 10, or printed by a printer 11, which is delivered to the receiving side through a facsimile equipment 12 or by mail or door-to-door.

On the receiving side, image data is received through a modem 13 in case of transmission, which is input to a CPU 14, or received through a facsimile equipment 15 in case of facsimile, which is input to the CPU 14 through an image sensor 16. Also, in case of mail, etc., image data in printed matters is input to the CPU 14 through the image sensor 16. In referring to corresponding relation data on the position designating codes as described in connection with Fig. 2, which is separately given from the transmitting side so as to be input to a memory 17 prior to restoration or stored therein previously, the CPU 14 carries out a rearrangement of the image elements of image data as input to restore an original image of the subject 6, which is displayed on a monitor 18 or printed by using a printer 19.

In the above operation, it is important that the CPU 9 on the transmitting side correctly recognizes the position designating codes on the image as input, so that position matching is previously carried out between the enciphering image guide means 1 and the CCD camera 8. Upon restoration or decipherment, the CPU 14 correctly recognizes position designating codes (which correspond to the position designating codes B1, B2, ... on the outgoing side 1b) of the image elements of the image enciphered by image processing with the aid of a position mark of the image as input, etc., and rearranges the image elements in referring to the position designating codes A1, A2, ... on the incoming side 1a which correspond to the position designating codes B1, B2, ... on the outgoing side 1b in corresponding relation data stored in the memory 17. Decipherment is thus carried out. As long as corresponding relation data is confidential, the confidentiality of image information delivered to the receiving side from the transmitting side is surely maintained even in case of a delivery by mistake or a furtive check. The features of encipherment according to the present invention reside in the fact that the more the image elements increase, the more deciperment is difficult due to the use of a quite casually produced combination of the optical fibers without utilizing logical enciphering means such as CPU, etc. which are seemed to be decipherable sooner or later.

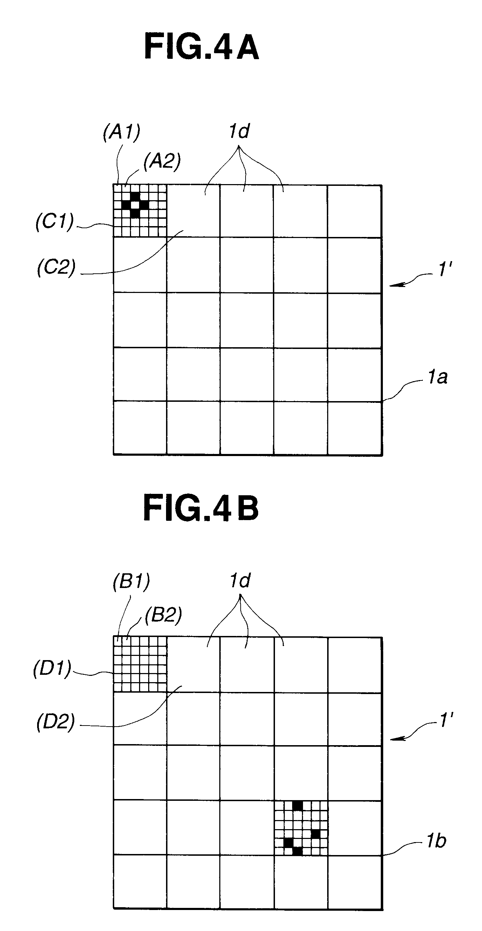

In this embodiment, the enciphering image guide means 1 is formed by a single enciphering image guide. Alternatively, referring to Figs. 4A and 4B, the enciphering image guide means 1' may be formed by an enciphering image guide assembly which includes a plurality of enciphering image guides 1d as irregularly assembled. In this case, as shown in Fig. 4A, position designating codes as given to the enciphering image guide assembly on the incoming side 1a are comprised of position designating codes C1, C2, ... of the enciphering image guides 1d and those A1, A2, ... of the optical fiber end faces of each enciphering image guide 1d, whereas as shown in Fig. 4B, position designating codes as given to the enciphering image guide assembly on the outgoing side 1b are comprised of position designating codes D1, D2, ... of the enciphering image guides 1d and those B1, B2, ... of the optical fiber end faces of each enciphering image guide 1d. Further, the enciphering image guide means may be a series connection of the enciphering image guides as shown in Figs. 1A to 1C, or that of the enciphering image guide assembly as shown in Fig. 4A and 4B. Furthermore, a single image guide unit as formed by bundling a plurality of optical fibers can be used to guide one image element. Corresponding relation data on those enciphering image guide means on the incoming and outgoing sides are obtained in the same way as described in connection with Fig. 2. It is to be noted that the inspection device may be a scanning type electron probe by which corresponding relation data can be obtained in the same way.

In this embodiment, a document as printed by the printer 11 is transmitted by the facsimile 12, which is received by the facsimile 15, and read and restored. Alternatively, when read by a line sensor, etc., a document to be transmitted by the facsimile on the transmitting side may directly be enciphered to provide a facsimile signal, which is received by the facsimile on the receiving side, and directly deciphered and output.

Concerning a means for converting image information as enciphered into an electric signal, a photoelectric conversion element such as a piezoelement or the like can be used in place of the CCD camera. Moreover, concerning recording media of image information as enciphered, a floppy disk, a memory card or a microfilm which is suitable for preservation can be used in addition to printing papers.

As described above, with the method of and system for enciphering image information according to the present invention, image information can be enciphered and dealt with in an easy way, and decipherment borders on impossibility since encipherment is carried out by a casual combination of enciphering image guides, and not a logical disposition such as computer processing, resulting in increased confidentiality of image information.

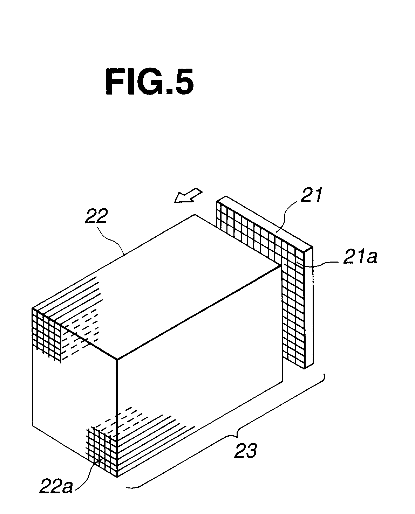

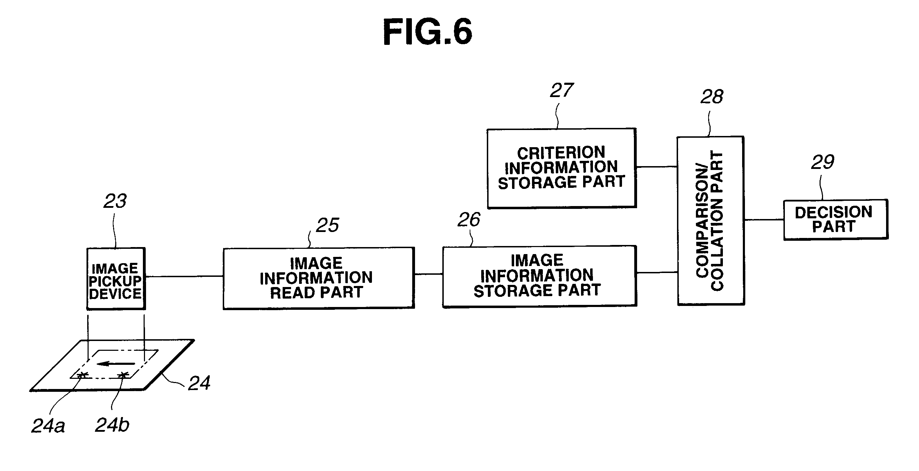

Referring next to Figs. 5 and 6, a description will be made with regard to an inspection system for deciding the identity of an inspection object.

Referring to Fig. 5, an image pickup device 23 includes a light receiving element array 21 with a plurality of photoelectric conversion light receiving elements 21a arranged in a matrix, and an image guide 22 with a plurality of optical fibers 22a assembled so that the arrangement on the input side or incoming side corresponds to that on the output side or outgoing side. In the image pickup device 23, an end face of each optical fiber 22a of the image guide 22 on the output side is regularly optically coupled with each light receiving element 21a or light receiving elements of the light receiving element array 21. That is, the arrangement of the image guide 22 on the output side is made to correspond to that of the light receiving element array 21, or in case the light receiving element 21a is smaller than the optical fiber 22a of the image guide 22, the end face of one optical fiber 22a is made to correspond to a predetermined number, more than two, of light receiving elements 21a of the light receiving element array 21.

The above structure has the advantage of being capable of construct the image pickup device without using a CCD camera. However, the image pickup device may be of a solid state type such as a CCD camera in place of the light receiving element array 21.

Referring to Fig. 6, the inspection system for deciding the identity of an inspection object includes the image pickup device 23 as described above, an inspection object 24, an image information read part 25 for reading image information from the image pickup device 23, an image information storage part 27 for temporarily storing image information as read, a criterion information storage part for previously storing, for every image information unit, criterion information which serves to decide the identity of image information, a comparison and collation part 28 for comparing and collating, for every image information unit, image information in the image information storage part 26 with criterion information in the criterion information storage part 7, and a decision part 29 for deciding the identity or approximation of image information as read in accordance with a comparison and collation result in the comparison and collation part 28. The inspection object 24 is relative, for example, to a mounted state of printed circuit boards, a printed state of cream solder, or identification of electronic and electric apparatus.

The inspection system having the above structure is operated as follows: An image of the inspection object 24 is conducted by the image guide 22 of the image pickup device 23, and an image element as formed in each optical fiber 22a is detected by each light receiving element 21a of the light receiving element array 21 as an image information unit. The image information read part 25 scans horizontally, for example, and reads one by one trains of light receiving elements 21a of the light receiving element array 21, which are stored in the image information storage part 26 of a frame memory type. In case one image element corresponds to a plurality of light receiving elements 21a, it is only necessary to skip horizontal and vertical scanning, or thin out image information as read at regular intervals. As soon as storing of image information is finished, the comparison and collation part 28 reads out image information in the image information storage part 26 one by one, and takes out criterion information corresponding thereto so as to carry out comparison and collation between the two, informing the decision part 29 of coincidence or incoincidence of the two. If the number of incoincidence is smaller than the allowable number, for example, the decision part 29 decides that the inspection object 24 is identical or approximate to the reference.

In the above operation, the premise is such that the inspection object 24 and the image pickup device 23 are relatively accurately positioned, or the position of the inspection object 24 is accurately grasped by the image pickup device 23. Concerning the positioning method, the inspection object 24 or the image pickup device 23 is simply positioned by controlling a positioning mechanism (not shown) such as an XY table, etc. so as to read positioning marks 24a, 24b of the inspection object 24. The image information read part 25 or the other sensor may be used as a means for reading the positioning marks 24a, 24b. On the other hand, concerning the position grasping method, the following are applicable: Using the comparison and collation part 28 to recognize the positioning marks 24a, 24b and preparing in the criterion information storage part 27 some criterion informations having a probable displacement as presumed, comparison and collation are carried out based on criterion information corresponding to the recognized position of the positioning marks 24a, 24b. Moreover, image information or criterion information or a read address of one of them is corrected based on calculation of a displacement amount of the positioning marks 24a, 24b.

With this inspection system, since image information is stored in the image information storage part 26 of a frame memory type in accordance with the arrangement of the image elements which have the magnitude corresponding to the image pickup device 23, the identity of the inspection object 24 can be decided by easy processing which needs relatively less processing time, i.e., comparison and collation processing with criterion information stored in the same way. Therefore, it is unnecessary to rely upon an image processing device which makes the system structure complex, and complicated image processing which needs much processing time such as split/cutting processing of an image, pattern recognition or the like, making the system structure and processing very simple.

In the above image pickup device 23, an object lens is not used, alternatively, is may be used to focus into an image of the inspection object 24 on the input side of the image guide 22. Moreover, it is possible to obtain image information with a predetermined wavelength by properly using a filter, etc., or tricolored image information by using a dichroic mirror.

Further, in the above image pickup device 23, an optical fiber serves as an image guide, alternatively, a plurality of optical fibers as assembled can serve as a single image guide so as to properly change the magnitude of the image element. A member other than the optical fiber can be used as an image guide. Furthermore, the image guide can serve as a temperature sensor by using a temperature characteristic of the optical fiber.

Moreover, in the above inspection system, in case comparison and collation processing can be carried out at read-out speed from the image pickup device 23, the image information storage part 26 of a frame memory type can be omitted.

As described above, with the image pickup device and the inspection system using same according to the present invention, the identity of the inspection object can be decided with the simple structure and processing and at high speed without relying upon image processing technique using the image processing device.

Having described the present invention in connection with the preferred embodiment, it is to be noted that the present invention is not limited thereto, and various changes and modifications are possible without departing from the spirit of the present invention.

## Claims

1. A method of enciphering and deciphering an image information with image elements, comprising the steps of:
forming a means for guiding the image information, said guiding means including a plurality of unit guides with end faces on first and second sides, said end faces on said first and second sides failing to correspond to each other in view of a positional relationship, each unit guide serving to guide one of the image elements;
giving position designating codes to said end faces of said plurality of unit guides on said first and second sides;
obtaining a corresponding relation information on said position designating codes on said first and second sides; and
providing to an image information processing device the image information which is input to said guiding means on said first side and output therefrom on said second side,
wherein when deciphering the image information as provided, said image information processing device recognizes said position designating codes of the image elements of the image information as provided and rearranges the image elements in accordance with said corresponding relation information so as to restore the image information input to said guiding means.

2. A method as claimed in claim 1, wherein said plurality of unit guides of said guiding means are irregularly assembled.

3. A method as claimed in claim 2, wherein said plurality of unit guides are in the form of optical fibers.

4. A method as claimed in claim 2, wherein said plurality of unit guides are in the form of guide assemblies, each guide assembly having optical fibers.

5. A method as claimed in claim 4, wherein said position designating codes are further given to said optical fibers.

6. A method as claimed in claim 1, wherein the obtaining step is carried out by providing a light on said end face of one of said plurality of unit guides on said first side and recognizing a position of said end face of said one of said plurality of unit guides on said second side from which said light goes out.

7. A system for enciphering and deciphering an image information with image elements, comprising:
a means for guiding the image information, said guiding means including a plurality of unit guides with end faces on first and second sides, said end faces on said first and second sides failing to correspond to each other in view of a positional relationship, each unit guide serving to guide one of the image elements, said end faces on said first and second sides having position designating codes, respectively;
a means for converting the image information obtained through said guiding means into a predetermined data;
a means for providing said predetermined data;
a means for receiving said predetermined data derived from said providing means;
a means for storing a corresponding relation information on said position designating codes on said end faces on said first and second sides;
a means for processing said predetermined data derived from said receiving means in recognizing said position designating codes of the image elements of the image information output from said guiding means on said second side so as to rearrange the image elements in accordance with said corresponding relation information; and
a means for indicating the image elements of the image information as rearranged.

8. A system as claimed in claim 7, wherein said plurality of unit guides of said guiding means are irregularly assembled.

9. A system as claimed in claim 8, wherein said plurality of unit guides are in the form of optical fibers.

10. A system as claimed in claim 8, wherein said plurality of unit guides are in the form of image guide assemblies, each guide assembly having optical fibers.

11. A system as claimed in claim 10, wherein said position designating codes are further given to said optical fibers.

12. A system as claimed in claim 7, wherein said converting means includes an image pickup device.

13. A system as claimed in claim 12, wherein said image pickup device includes a CCD camera.

14. A system for picking up an image information, comprising:
a means for guiding the image information, said guiding means including a plurality of unit guides as assembled regularly, each having an end face on an outgoing side; and
a means for converting photoelectrically the image information into an electric signal, said converting means including a plurality of light receiving elements, at least one of said plurality of light receiving elements being optically coupled with said end face of said each unit guide.

15. A system as claimed in claim 14, wherein said plurality of unit guides of said guiding means include optical fibers.

16. A system as claimed in claim 14, wherein said converting means includes a light receiving element array with a plurality of light receiving elements as arranged regularly.

17. A system as claimed in claim 14, wherein said converting means includes a solid state image pickup device.

18. A system for confirming an identity of an object, comprising:
a means for picking up an image information of the object;
a means for reading a unit of said image information of said picking up means;
a means for storing a unit of a criterion information for deciding the identity of said unit of said image information;
a means for comparing said unit of said image information with said unit of said criterion information; and
a means for deciding the identity of said unit of said image information in accordance with a result of said comparing means.

19. A system as claimed in claim 18, wherein said picking up means includes a means for guiding said image information and including a plurality of unit guides as assembled regularly, each unit guide having an end face on an outgoing side and serving to guide one of image elements of said image information, and a means for converting photoelectrically said image information into an electric signal and including a plurality of light receiving elements, at least one of said plurality of light receiving elements being optically coupled with said end face of said each unit guide.
